# EUROPEAN PATENT SPECIFICATION

(11) **EP 3 572 436 B1**
(45) Date of publication and mention of the grant of the patent: **30.10.2024**
(21) Application number: 18741464.4
(22) Date of filing: 11.01.2018
(51) Int. Cl.: C08L 3/02, C08B 30/18, A23L 29/206, A23L 29/30

(54) **HIGHLY DISPERSIBLE DEXTRIN AND PRODUCTION METHOD THEREFOR**
HOCHGRADIG DISPERGIERBARES DEXTRIN UND HERSTELLUNGSVERFAHREN DAFÜR
DEXTRINE HAUTEMENT DISPERSIBLE ET SON PROCÉDÉ DE PRODUCTION

(30) Priority: 20.01.2017 JP 2017008083; 07.08.2017 JP 2017152319
(43) Date of publication of application: 27.11.2019
(73) Proprietor: Nutri Co., Ltd., Mie 510-0013 (JP)
(72) Inventor: UWAMORI, Shouta, Yokkaichi-shi Mie 510-0013 (JP); TANIYAMA, Yohei, Yokkaichi-shi Mie 510-0013 (JP)
(74) Representative: Hoffmann Eitle
(86) International application number: PCT/JP2018/000433
(87) International publication number: WO 2018/135363

(56) References cited:
- JP-A- 2015 109 868
- JP-A- 2015 181 472
- JP-A- 2016 505 242
- PRISCILLA PAIVA LUZ ET AL: "A low-cost ultrasonic spray dryer to produce spherical microparticles from polymeric matrices", QUIMICA NOVA, vol. 30, no. 7, 1 January 2007 (2007-01-01), BR, pages 1744 - 1746, XP055722652, ISSN: 0100-4042, DOI: 10.1590/S0100-40422007000700041
- TAKEITI, C. Y. ET AL.: "Morphological andphysicochemical characterization of commercial maltodextrins with different degrees of dextrose-equivalent", INTERNATIONAL JOURNAL OF FOOD PROPERTIES, vol. 13, no. 2, 24 February 2010 (2010-02-24), pages 411 - 425, XP055506720
- MONSIVAIS, P. ET AL.: "Soluble fiber dextrin enhances the satiating power of beverages", APPETITE, vol. 56, no. 1, 28 October 2010 (2010-10-28), pages 9 - 14, XP028127562
- KNAPP, B. K. ET AL.: "Soluble Fiber Dextrins and Pullulans Vary in Extent of Hydrolytic Digestion in Vitro and in Energy Value and Attenuate Glycemic and Insulinemic Responses in Dogs", JOURNAL OF AGRICULTURAL AND FOOD CHEMISTRY, vol. 58, no. 21, 10 November 2010 (2010-11-10), pages 11355 - 11363, XP055506721

## Description

### TECHNICAL FIELD

The present invention relates to a highly dispersible dextrin and a method for producing the same.

### BACKGROUND ART

Swallowing movement is performed by various nervous systems and muscle systems working in coordination, but this movement may be hindered due to old age or various diseases. Persons with such swallowing disorder may accidentally swallow food not into esophagus but into the respiratory tract or the like (aspiration) with a higher probability compared to healthy persons. This problem of aspiration occurs more frequently in low viscosity liquid foods (e.g., water, soup, moisture-containing food, etc.) than in solid foods. In order to prevent aspiration, thickeners are used which change the texture of liquid foods to sol- or gel-like texture. As such thickeners, polysaccharide thickeners like agar, gelatin, starch, guar gum, xanthan gum, locust bean gum, etc. or combinations thereof have been frequently used (Patent Document No. 1: Japanese Patent No. 4694109).

Currently, thickeners most commonly used in nursing care sites or medical sites are thickeners whose major components are xanthan gum and dextrin. As methods for preparing dextrin particles used in thickeners, two methods are known: the drum dry method in which dextrin solution is dried upon heated drums, and the spray dry method in which dextrin solution is spray-dried. Thickeners containing dextrin particles prepared by the drum dry method (drum dry product; sheet-like shape) are good in dispersibility in moisture, etc. but expensive since the production cost of dextrin particles is high. On the other hand, dextrin particles prepared by the spray dry method (spray dry product; spherical shape) are cheap, but thickeners containing this spray dry product are not good in dispersibility in moisture, etc.

### PRIOR ART LITERATURE

### Patent Documents

Patent Document No. 1: Japanese Patent No. 4694109

### DISCLOSURE OF THE INVENTION

### PROBLEM FOR SOLUTION BY THE INVENTION

It is an object of the present invention to provide dextrin particles at a low cost which may be used as a component of thickeners that are good in dispersibility in moisture, etc.

### MEANS TO SOLVE THE PROBLEM

As a result of extensive and intensive researches, the present inventors have found that it is possible to prepare fibrous dextrin particles by spray drying a highly viscous, aqueous dextrin solution with a spray dryer and that thickeners containing the thus prepared dextrin particles are good in dispersibility in moisture, etc. Based on this finding, the present invention has been achieved.

The invention is defined in the claims.

### EFFECT OF THE INVENTION

According to the present invention, it has become possible to prepare at a low cost dextrin particles which may be used as a component of thickeners that are good in dispersibility in moisture, etc.

The present specification encompasses the contents disclosed in the specifications and/or drawings of Japanese Patent Applications Nos. 2017-008083 and 2017-152319 based on which the present patent application claims priority.

### BRIEF DESCRIPTION OF THE DRAWINGS

[Fig. 1] Shapes as observed of dextrin particles (product of Example 1 and comparative products 1 to 7). Scale bar represents 100 µm at 100X magnification and 10 µm at 500X and 1000X magnification.
[Fig. 2-1] Shapes as observed of dextrin particles (products of Examples 1 to 6 and comparative product 8). Scale bar represents 100 µm at 100X magnification and 10 µm at 500X and 1000X magnification.
[Fig. 2-2] Shapes as observed of dextrin particles (comparative products 9 to 11). Scale bar represents 100 µm at 100X magnification and 10 µm at 500X and 1000X magnification.
[Fig. 3] Shapes as observed of dextrin particles (product of Example 7). Scale bar represents 100 µm at 100X magnification and 10 µm at 500X and 1000X magnification.

### BEST MODES FOR CARRYING OUT THE INVENTION

Hereinbelow, the present invention will be described in detail.

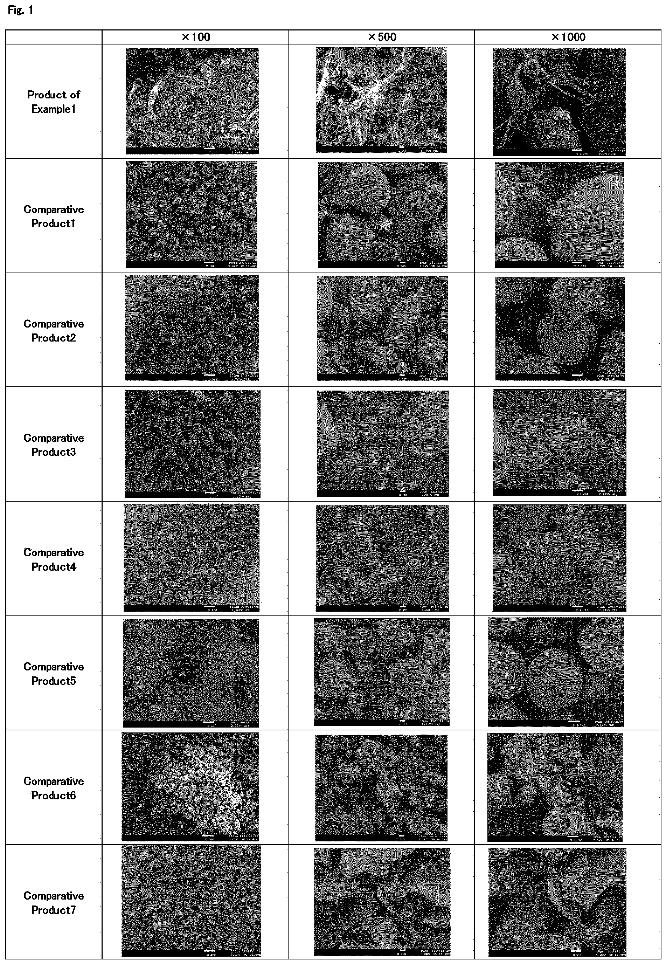

The present invention provides fibrous dextrin particles. The fibrous dextrin particles of the present invention may take a yarn-like, long and narrow shape as shown in Fig. 1. The yarn-like, long and narrow shape of the fibrous dextrin is clearly different from the shapes of spherical dextrin or sheet-like dextrin. Further, while the sheet-like dextrin frequently has a planar structure whose cross-section is a polygon enclosed by straight lines, fibrous dextrin particles frequently have a structure with curved surfaces, the cross-section of which may take a circular, elliptical or other shapes whose profiles are enclosed by curved lines.

Fibrous dextrin particles can be prepared by spray drying a dextrin solution. The viscosity of the dextrin solution to be spray dried is 100 mPa·s or more. The upper limit is not particularly limited. Any high viscosity may be used as long as dextrin is at concentrations within a range in which it can be sprayed with a spray dryer. Even when a dextrin solution has a high viscosity beyond the measuring limit, it is possible to fiberize dextrin. The present inventors have confirmed that fiberization of a dextrin solution is possible even when the dextrin concentration is at the upper limit that enables feeding to a spray dryer with a pump (viscosity is beyond the measuring limit (50,000 mPa·s)) (see Example 7 described later). The viscosity of dextrin solution may, for example, range from 100 to 10000 mPa·s, preferably from 100 to 6000 mPa·s, and more preferably from 170 to 6000 mPa·s. The viscosity of dextrin solution may be measured with a type-B viscometer (Toki Sangyo; TVB-10) at 12 rpm with the temperature of solution at 25°C. The fibrous dextrin particles can be obtained in a state of powder. When the dextrose equivalent (DE) of the dextrin in a dextrin solution increases, the viscosity of the solution decreases. When the temperature of the dextrin solution increases, the viscosity of the solution decreases. Further, the viscosity increases depending on the dextrin concentration in the dextrin solution. The concentration of dextrin solution to be spray dried is suitably 40% by mass or more, preferably 40-65% by mass, and more preferably 50-60% by mass.

The solvent for dextrin solution may be water or a mixture of water and other solvents (such as ethanol, methanol, propanol, etc.). Dextrin, the solute, is not particularly limited. For example, carbohydrates obtainable by hydrolysis of starch, dextrin or glycogen may be used. The DE (dextrose equivalent) of dextrin is suitably 2-30, preferably 5-30, and more preferably10-13. DE may be measured by the Somogyi method. The weight-average molecular weight of the solute dextrin is suitably 4,000-100,000, preferably 17,000-100,000. The raw material from which the solute dextrin is derived is not particularly limited. For example, corn, sweet potato, tapioca, wheat, rice, or the like may be enumerated.

Spray drying may be performed with any spray dryer (e.g., nozzle type sprayer or one using a disk (rotary atomizer system)). The inlet temperature of the drying chamber of a spray dryer is suitably 100-250°C, preferably 140-220°C, and more preferably 160-200°C.

The liquid temperature of a dextrin solution during spray drying may be 0-100°C, preferably 20-100°C.

Dextrin particles obtainable by spray drying a dextrin solution with a viscosity of 100 mPa·s or more may be either fibrous particles alone or a mixture of fibrous particles and particles with other shapes (such as spherical, sheet-like, etc.).

The thickness of the fibrous dextrin particles of the present invention is not particularly limited. However, the lower limit of thickness is, for example, 0.01 µm, preferably 0.1 µm; and the upper limit of thickness is, for example, 1,000 µm, preferably 100 µm. The thickness of the fibrous dextrin particles of the present invention can be within various numerical range such as 0.01 µm-1,000 µm, 0.01 µm-100 µm, 0.1 µm-1000 µm, and 0.1 µm-100 µm.

The length of the fibrous dextrin particles of the present invention also is not particularly limited. However, the lower limit of length is, for example, 0.12 µm, preferably 1.2 µm; and the upper limit of length is, for example, 30,000 µm, preferably 3,000 µm. The length of the fibrous dextrin particles of the present invention can be within various numerical ranges such as 0.12 µm-30,000 µm, 0.12 µm-3,000 µm, 1.2 µm-30,000 µm, and 1.2 µm-3,000 µm.

The length of the fibrous dextrin particles of the present invention is suitably at least 3 times the thickness thereof, preferably at least 3.5 times, more preferably at least 4 times, and even more preferably at least 5 times the thickness thereof. Further, the length of the fibrous dextrin particles of the present invention may be at least 7 times, or even at least 10 times the thickness. The upper limit of the ratio of length to thickness (length/thickness) is not particularly limited. The ratio is suitably 10,000, preferably 1,000.

The thickness and length of the dextrin particles may be measured by observation with an FE type scanning electron microscope. The moisture content of the dextrin particles is suitably 0-10% by mass, preferably 3-8% by mass, more preferably 4-6% by mass.

The moisture content of the dextrin particles may be determined with a halogen moisture meter HG63 (Mettler Toledo) by heating approximately 2 g of dextrin particles at 120°C for 3 minutes.

The fibrous dextrin particles of the present invention may be used for improving food texture. For example, the fibrous dextrin particles may be added to thickeners containing xanthan gum particles for the specific purpose of aiding the dispersibility and solubility of the xanthan gum particles. Briefly, by adding the fibrous dextrin particles of the present invention, it is possible to prevent xanthan gum particles in liquid food from adhering together to form lumps, whereby the dispersibility of xanthan gum particles in the liquid food is improved. As a result of this improvement of dispersibility, solubility can be enhanced. Therefore, the present invention also provides thickeners comprising the above-described fibrous dextrin particles. The thickener of the present invention may comprise dextrin particles with a shape other than fibrous shape.

The thickener of the present invention may be used to improve food texture for the purpose of medical care/nursing care or for the purpose of general food processing. For example, the thickener of the present invention may be used for changing the texture of liquid foods into a sol- or gel-like texture. For the purpose of medical care/nursing care, the texture of liquid foods that can potentially cause aspiration as in persons with swallowing difficulties and elderly persons (e.g., drink, soup, liquid contained in solid food, etc.) may be changed into a sol- or gel-like texture.

As a solating agent that induces solation, the main agent xanthan gum may suitably be used. The term "main agent" means a major component for improving food texture, and does not mean that its quantity accounts for a major portion. Therefore, the amount of xanthan gum may be less than the amount of other components such as dextrin. As described above, xanthan gum, when in the state of a fine powder, easily form lumps in aqueous solution, thus lacking dispersibility and solubility. To improve such dispersibility and solubility of xanthan gum, the thickener of the present invention preferably uses xanthan gum as a granulated product. It is more preferable to perform granulation in such a way as to make porous particles capable of improving solubility. The method of granulating xanthan gum is not particularly limited. For example, a method used for forming porous particles capable of enhancing solubility may suitably be used (e.g., the flow coating granulation method using a flow coater). The particle size of the granulated product may be selected in any desired manner using solubility and dispersibility in liquid food and other indicators. For example, the diameter may be 250-1000 µm.

Xanthan gum particles and dextrin particles may be mixed with a mixer or the like. The mixing ratio may be selected at any values within the range in which the dispersibility of xanthan gum particles can be aided. For example, in view of dispersibility in liquid food and appropriate viscosity formation after dissolution, the mixing ratio may be 1 :9-7:3, preferably 2:8-5:5, more preferably 7:13 (35:65) as a weight ratio of xanthan gum particles and dextrin particles.

The thus prepared thickener of the present invention rapidly disperses in liquid food even at low temperatures upon addition of about 1-3% relative to the liquid food. Further, the thickener of the present invention dissolves easily without leaving anything like lumps behind upon mixing for several minutes with a simple device such as a stirrer instead of using a sophisticated machine. Thus, the thickener is capable of inducing homogenous solation of the liquid food. The resultant solated food exerts the characteristics of xanthan gum effectively, and a stable viscosity is retained within the range of temperatures at which meals at eaten. Further, this solated food is so low in stickiness that it is much easier to swallow. What is more, the solated food is extremely low in roping property (roping is a problem that accompanies the use of conventional thickeners) and, hence, improves the working efficiency and hygiene of meal care.

The thickener of the present invention may be used in homes, hospitals and even in food processing factories or the like. The application of the thickener of the present invention is not limited to the purposes of medical/nursing care or industrial purposes and it may also be used in general cooking materials as a substitute for starch or arrowfoot flour. Since the thickener of the present invention is capable of retaining a more stable thickness than starch or arrowfoot flour, it becomes possible to prevent confectionery and cooked food from undergoing rheology modification due to temperature changes after cooking to thereby provide a stable texture and other advantages.

Further, the thickener of the present invention may be used not only to induce solation but also to induce gelation. In thickeners for inducing gelation, a gelling agent must be added in addition to the above-described dextrin particles. This gelling agent may be any edible substance that is capable of inducing gelation of food. For example, xanthan gum, locust bean gum, carrageenan, gellan gum, agar, gelatin and the like may be used either alone or in combination. These gelling agents may be either in the form of a powder or made into particles as in the case of the above-described solating agent.

The gelling agent is added to the dextrin particles and mixed together. The mixing ratio is suitably 1:9 to 7:3, preferably 2:8 to 5:5, as a weight ratio of gelling agent to dextrin particles.

Take as an example a gelling agent that is composed of xanthan gum, locust bean gum and agar in combination, the proportions of locust bean gum, agar, xanthan gum and dextrin are suitably about 2:3:6:10. However, these are not the sole proportions that can be adopted and they may be varied within a range in which gelation can be induced.

The thickener for gelation that is composed as described above can rapidly disperse in warmed liquid food upon addition at 0.5-1.5% relative to the liquid food. It can dissolve upon simple stirring without using a sophisticated machine. By decreasing the temperature of the liquid food after dissolution, a gelatin jelly-like gel can be formed. The thus gelated food can be improved to become easier to swallow because it is almost as sticky as agar and is capable of aggregating as efficiently as gelatin. Further, when a once cooled gelated food is re-warmed, the gel can dissolve extremely slowly and can retain stability even at around 60°C. As a result, a warm liquid food can be improved into a warm gelated food, an achievement that has so far been difficult to realize by means of gelatin.

The thickener of the present invention may be used not only in foods but also in cosmetics, pharmaceuticals and other industrial products.

The present invention also provides foods comprising the fibrous dextrin particles. The food of the present invention may comprise dextrin particles with a shape other than fibrous shape.

The food of the present invention may be any food or drink. In particular, the food of the present invention may be for use in enteral nutrition, as exemplified by liquid diets for those who have difficulty in taking food from the mouth, e.g., patients with swallowing difficulties, patients with chronic bowel diseases, and elderly persons, and such liquid diets may be any of natural food type (using ordinary food), semi-digested type (using somewhat degraded food product) or digested type (that can be absorbed as such without being degraded).

Further, since the fibrous dextrin particles of the present invention have a suitable degree of oil absorbing property, they may also be applicable to foods such as sauce powder, soup powder, bread, donuts, confectionery, or the like.

### EXAMPLES

Hereinbelow, the present invention will be described more specifically with reference to the following Examples. However, the present invention is not limited to these Examples.

### [Example 1] Preparation of Fibrous Dextrin Particles

### Methods

Dextrin (DE10 to 13) (weight-average molecular weight: 17,000) (Sundeck #100; Sanwa Starch Co.) (150 g) was dissolved in 100 g of water (temperature: 20°C; viscosity: 1370 mPa·s). Spraying was performed with a mini-spray dryer (B-290; Büchi com.) under the following conditions: nozzle hole diameter 0.7 mm, feeding rate 6 ml/min, aspirator 100%, dryer's inlet temperature 200°C, and dryer's outlet temperature 140°C. As a result, 115 g of fibrous dextrin particles were obtained (product of Example 1).

As comparative products, 6 types of commercial dextrin (spray dry products) (comparative products 1 to 6) and one type of commercial dextrin (drum dry product) (comparative product 7) were used.
Shape observation: Shapes were observed with an FE type scanning electron microscope (JOEL Ltd.: JSM-7001F)
Oil absorbing capacity (g): The amount of refined rape oil that was added dropwise to 3 g of dextrin until the whole dextrin became putty-like.
Sedimentation test: A sample (3 g) was added to 300 g of distilled water in a 300 ml tall beaker, and the time required for the entire sample to form a sediment that sank from the water surface was measured.
Dispersibility test: A sample (35 g) and xanthan gum particles* (15 g) were mixed. Six grams of the resultant mixture was added to 294 g of distilled water in a 300 ml tall beaker, which was left standing for 5 sec, followed by stirring with a spatula at 3 rotations/sec for 10 sec. Then, the number of lumps formed was counted.
*Xanthan gum particles were granulated using xanthan gum 75%, dextrin 20% and trisodium citrate 5% with a fluidized bed granulator.

### Results

The results of shape observation are shown in Fig. 1. Other test results are shown in the Table below.

**(Table 1)**

| Tested Product | Product of Example 1 | Drum dry product (Comparative product 7) | Spray dry product (Comparative product 1) |
|---|---|---|---|
| Oil absorption | 9.5 g | 12.6 g | 3.2 g |
| Sedimentation | 3 sec | 30-60 see | 120 sec or more |
| Dispersibility | 0 | 0 | 100 or more |

While the product of Example 1 was fibrous in shape, comparative products 1 to 6 (spray dry products) were spherical and comparative product 7 (drum dry product) was sheet-like (Fig. 1). The fibrous dextrin particles of Example 1 were 0.4-85.7 µm thick and 37.9-750 µm long, with the length to thickness ratio (length/thickness) being 4.2-103.3.

The product of Example 1 had good dispersibility, which was comparable to that of comparative product 7 (drum dry product). The dispersibility of comparative product 1 (spray dry product) was poor (Table 1). Since the fibrous dextrin particles and sheet-like dextrin particles had large surface areas whereas the spherical dextrin particles had small surface areas, it is assumed that the larger the surface areas of dextrin particles, the more effective they are in enhancing the dispersibility of xanthan gum particles in water.

The product of Example 1 had good sedimentation property, and the time required for sinking from the water surface was shorter than that of comparative product 1 (spray dry product) and even shorter than that of comparative product 7 (drum dry product) (Table 1).

With respect to oil absorption, the product of Example 1 absorbed about twice the amount by comparative product 1 (spray dry product) and about one half the amount by comparative product 7 (drum dry product). Thus, the product of Example 1 had a moderate oil absorption capacity (Table 1).

### [Examples 2 to 6] Examination of Viscosity in Preparation of Fibrous Dextrin Particles

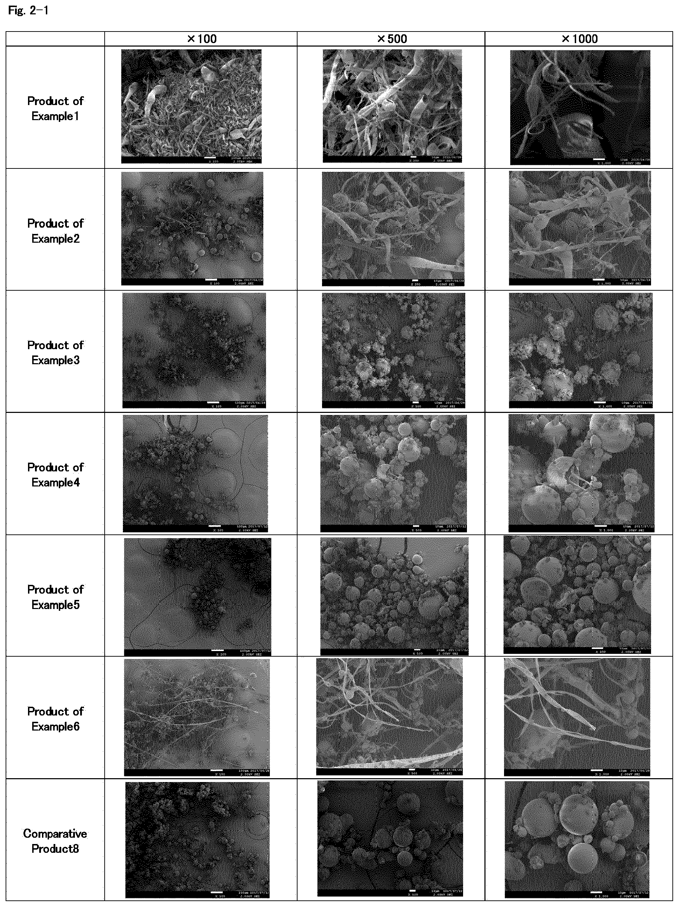

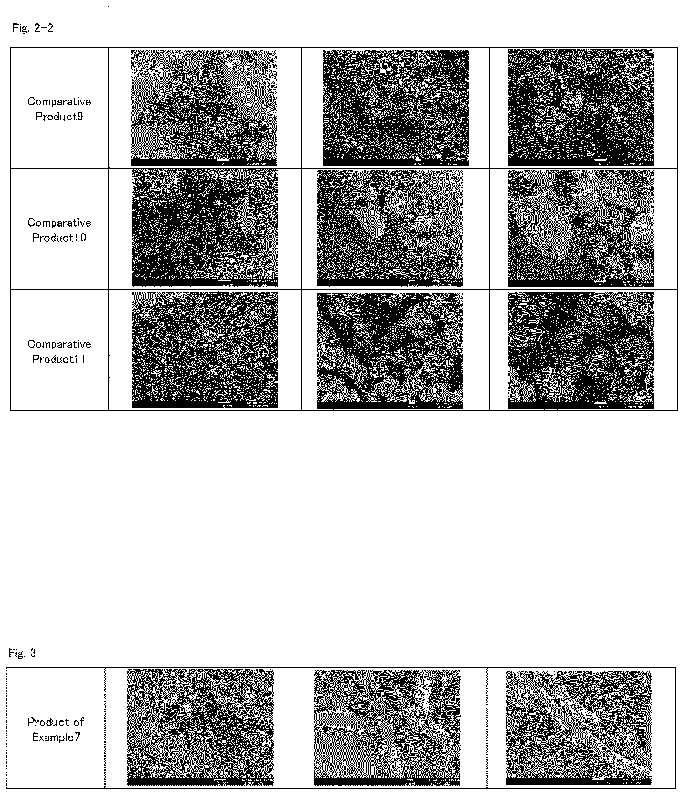

Dextrin particles were prepared in the same manner as described in Example 1 except that the viscosity of dextrin solution was changed. The weight-average molecular weight of dextrin with DE value 10-13 (Sundeck #100; Sanwa Starch Co.) used in subject Examples is 17,000, and that of dextrin with DE value 2-5 (Sundeck #30; Sanwa Starch Co.) is 100,000. The results of fiberization and dispersibility test are shown in Table 2 below. The results of shape observation are shown in Fig. 2. Further, for products of Examples 1 to 6, maxima and minima of thickness, length, and length to thickness ratio (length/thickness) of fibrous dextrin particles are summarized in Table 3.

**(Table 2)**

| | DE Value of Dextrin | Concentration of Solution (% by mas) | Temperature | Viscosity (mPa-s) | Fiberization *1 | Dispersibility Test *2 |
|---|---|---|---|---|---|---|
| Product of Example 1 | 10~13 | 60% | 20°C | 1370 | ○ | ○ |
| Product of Example 2 | 10~13 | 55% | 20°C | 392 | ○ | ○ |
| Product of Example 3 | 10~13 | 50% | 20°C | 170 | ○ | ○ |
| Product of Example 4 | 10~13 | 49% | 20°C | 124 | Δ | Δ |
| Product of Example 5 | 10~13 | 48% | 20°C | 109 | Δ | Δ |
| Comparative Product 8 | 10~13 | 47% | 20°C | 94 | × | × |
| Comparative Product 9 | 10~13 | 46% | 20°C | 80 | × | × |
| Comparative Product 10 | 10~13 | 40% | 20°C | 24 | × | × |
| Product of Example 6 | 2~5 | 40% | 20°C | 5810 | ○ | ○ |
| Comparative Product 11 | 10~13 | 50% | 90°C | 24 | × | × |

| | | | | | | |
|---|---|---|---|---|---|---|
| *1 o: fiberized; Δ: slightly fiberized; ×: not fiberized *2 o: no lump; Δ: 1 to 19 lumps; ×: 20 or more lumps | | | | | | |

**(Table 3)**

| | Thickness | | Length | | Length/Thickness | |
|---|---|---|---|---|---|---|
| | Minimum | Maximum | Minimum | Maximum | Minimum | Maximum |
| Product of Example 1 | 0.4 µm | 85.7 µm | 37.9 µm | 750 µm | 4.2 | 103.3 |
| Product of Example 2 | 2 µm | 18.3 µm | 44.5 µm | 273.6 µm | 14.1 | 41 |
| Product of Example 3 | 0.4 µm | 3.1 µm | 9.3 µm | 35.2 µm | 11.7 | 44 |
| Product of Example 4 | 0.6 µm | 2.7 µm | 12.8 µm | 54.4 µm | 8.5 | 73.3 |
| Product of Example 5 | 1.4 µm | 2.8 µm | 15.7 µm | 29.3 µm | 10.5 | 11.2 |
| Product of Example 6 | 4.3 µm | 19.1 µm | 66.7 µm | 1353 µm | 20.2 | 201.9 |

Fibrous dextrin particles could be prepared by spray drying a dextrin solution with a viscosity of 100 mPa·s or more.

### [Example7] Spray Test on 73% Dextrin Solution

### Methods

Dextrin (DE 10-13) (weight-average molecular weight 17,000) (Sundeck #100; Sanwa Starch Co.) (73 g) was dissolved in 27 g of water (temperature: 20°C; viscosity: above the measuring limit (50,000 mPa·s)). Spraying was performed with a mini-spray dryer (B-290; Büchi com.) under the following conditions: nozzle hole diameter 0.7 mm, feeding rate 0.5 ml/min, aspirator 100%, dryer's inlet temperature 200°C, and dryer's outlet temperature 140°C. As a result, fibrous dextrin particles were obtained.

### Results

The results of shape observation are shown in Fig. 3. The fibrous dextrin particles obtained in Example 7 were 3.6-59.5 µm thick and 107.1-611.9 µm long, with the length to thickness ratio (length/thickness) being 4.7-32.2. The degree of fiberization was o (fiberized); and the result of dispersibility test was o (no lump).

As described above, it is possible to fiberize dextrin even at high viscosities beyond the measuring limit (50,000 mPa·s).

All publications, patents and patent applications cited herein are incorporated herein by reference in their entirety.

### INDUSTRIAL APPLICABILITY

The fibrous dextrin particles of the present invention are applicable as thickeners.

## Claims

1. Fibrous dextrin particles obtainable by spray drying a dextrin solution with a viscosity of 100 mPa·s or more,
as measured in the description,
wherein the thickness thereof is 0.01-1000 um and the length thereof is at least 3 times the thickness thereof.

2. The fibrous dextrin particles of claim 1, wherein the viscosity of the dextrin solution to be spray dried is from 170 mPa·s to 6000 mPa·s.

3. The fibrous dextrin particles of claim 1 or 2, wherein the viscosity of the dextrin solution is measured with a type-B viscometer (Toki Sangyo; TVB-10) at 12 rpm with the temperature of solution at 25°C.

4. The fibrous dextrin particles of any one of claims 1 to 3, wherein the concentration of the dextrin solution to be spray dried is 40% by mass or more.

5. The fibrous dextrin particles of any one of claims 1 to 4, wherein the concentration of the dextrin solution to be spray dried is 40-65% by mass.

6. The fibrous dextrin particles of any one of claims 1 to 5, wherein the concentration of the dextrin solution to be spray dried is 50-60% by mass.

7. The fibrous dextrin particles of any one of claims 1 to 6, wherein the thickness thereof is 0.1-100 µm.

8. The fibrous dextrin particles of any one of claims 1 to 7, obtainable by using a spray dryer, wherein the inlet temperature of the drying chamber of the spray dryer is 140-220°C.

9. The fibrous dextrin particles of any one of claims 1 to 8, obtainable by using a dextrin solution wherein the dextrose equivalent (DE) of dextrin is 10-13.

10. The fibrous dextrin particles of any one of claims 1 to 9, obtainable by using a solute dextrin, wherein the weight-average molecular weight of the solute dextrin is 4,000-100,000 or 17,000-100,000.

11. A thickener comprising the fibrous dextrin particles of any one of claims 1 to 10.

12. A food comprising the fibrous dextrin particles of any one of claims 1 to 10.

13. A method of preparing fibrous dextrin particles, comprising spray drying a dextrin solution with a viscosity of 100 mPa·s or more.

14. The method of preparing fibrous dextrin particles according to claim 13, wherein the viscosity of the dextrin solution to be spray dried is from 170 mPa·s to 6000 mPa·s.

15. The method of preparing fibrous dextrin particles according to any one of claims 13 or 14, wherein the concentration of the dextrin solution to be spray dried is 40% by mass or more.

16. The method of preparing fibrous dextrin particles according to any one of claims 13 to 15, wherein the concentration of the dextrin solution to be spray dried is 40-65% by mass.

17. The method of preparing fibrous dextrin particles according to any one of claims 13 to 16, wherein the concentration of the dextrin solution to be spray dried is 50-60% by mass.

18. The method of preparing fibrous dextrin particles according to any one of claims 13 to 17, wherein the inlet temperature of the drying chamber of a spray dryer is 140-220°C.

19. The method of preparing fibrous dextrin particles according to any one of claims 13 to 18, wherein the DE of dextrin is 10-13.

20. The method of preparing fibrous dextrin particles according to any one of claims 13 to 19, wherein the weight-average molecular weight of the solute dextrin is 4,000-100,000 or 17,000-100,000.

## Patentansprüche

1. Faserförmige Dextrinpartikel erhältlich durch Sprühtrocknen einer Dextrinlösung mit einer Viskosität von 100 mPa·s oder mehr,
wie in der Beschreibung gemessen,
wobei die Dicke davon 0,01-1000 µm beträgt und die Länge davon mindestens das Dreifache der Dicke davon beträgt.

2. Faserförmige Dextrinpartikel gemäß Anspruch 1, wobei die Viskosität der zu sprühtrocknenden Dextrinlösung von 170 mPa·s bis 6000 mPa·s beträgt.

3. Faserförmige Dextrinpartikel gemäß Anspruch 1 oder 2, wobei die Viskosität der Dextrinlösung mit einem Typ-B-Viskosimeter (Toki Sangyo; TVB-10) bei 12 rpm mit der Temperatur der Lösung bei 25°C gemessen wird.

4. Faserförmige Dextrinpartikel gemäß irgendeinem der Ansprüche 1 bis 3, wobei die Konzentration der zu sprühtrocknenden Dextrinlösung 40 Masse-% oder mehr beträgt.

5. Faserförmige Dextrinpartikel gemäß irgendeinem der Ansprüche 1 bis 4, wobei die Konzentration der zu sprühtrocknenden Dextrinlösung 40-65 Masse-% beträgt.

6. Faserförmige Dextrinpartikel gemäß irgendeinem der Ansprüche 1 bis 5, wobei die Konzentration der zu sprühtrocknenden Dextrinlösung 50-60 Masse-% beträgt.

7. Faserförmige Dextrinpartikel gemäß irgendeinem der Ansprüche 1 bis 6, wobei die Dicke davon 0,1-100 µm beträgt.

8. Faserförmige Dextrinpartikel gemäß irgendeinem der Ansprüche 1 bis 7, erhältlich durch Verwendung eines Sprühtrockners, wobei die Einlasstemperatur der Trockenkammer des Sprühtrockners 140-220°C beträgt.

9. Faserförmige Dextrinpartikel gemäß irgendeinem der Ansprüche 1 bis 8, erhältlich durch Verwendung einer Dextrinlösung, wobei das Dextrose-Äquivalent (DE) des Dextrins 10-13 beträgt.

10. Faserförmige Dextrinpartikel gemäß irgendeinem der Ansprüche 1 bis 9, erhältlich durch Verwendung eines gelösten Dextrins, wobei das gewichtsmittlere Molekulargewicht des gelösten Dextrins 4.000-100.000 oder 17.000-100.000 beträgt.

11. Verdickungsmittel umfassend die faserförmigen Dextrinpartikel gemäß irgendeinem der Ansprüche 1 bis 10.

12. Lebensmittel umfassend die faserförmigen Dextrinpartikel gemäß irgendeinem der Ansprüche 1 bis 10.

13. Herstellungsverfahren für faserförmige Dextrinpartikel, umfassend Sprühtrocknen einer Dextrinlösung mit einer Viskosität von 100 mPa·s oder mehr.

14. Herstellungsverfahren für faserförmige Dextrinpartikel gemäß Anspruch 13, wobei die Viskosität der zu sprühtrocknenden Dextrinlösung von 170 mPa·s bis 6000 mPa·s beträgt.

15. Herstellungsverfahren für faserförmige Dextrinpartikel gemäß irgendeinem der Ansprüche 13 oder 14, wobei die Konzentration der zu sprühtrocknenden Dextrinlösung 40 Masse-% oder mehr beträgt.

16. Herstellungsverfahren für faserförmige Dextrinpartikel gemäß irgendeinem der Ansprüche 13 bis 15, wobei die Konzentration der zu sprühtrocknenden Dextrinlösung 40-65 Masse-% beträgt.

17. Herstellungsverfahren für faserförmige Dextrinpartikel gemäß irgendeinem der Ansprüche 13 bis 16, wobei die Konzentration der zu sprühtrocknenden Dextrinlösung 50-60 Masse-% beträgt.

18. Herstellungsverfahren für faserförmige Dextrinpartikel gemäß irgendeinem der Ansprüche 13 bis 17, wobei die Einlasstemperatur der Trockenkammer des Sprühtrockners 140-220°C beträgt.

19. Herstellungsverfahren für faserförmige Dextrinpartikel gemäß irgendeinem der Ansprüche 13 bis 18, wobei das DE des Dextrins 10-13 beträgt.

20. Herstellungsverfahren für faserförmige Dextrinpartikel gemäß irgendeinem der Ansprüche 13 bis 19, wobei das gewichtsmittlere Molekulargewicht des gelösten Dextrins 4.000-100.000 oder 17.000-100.000 beträgt.

## Revendications

1. Particules de dextrine fibreuse pouvant être obtenues par séchage par pulvérisation d'une solution de dextrine ayant une viscosité de 100 mPa·s ou plus, telle que mesurée dans la description, dans lesquelles l'épaisseur de celles-ci est de 0,01 à 1 000 µm et la longueur de celles-ci est d'au moins 3 fois l'épaisseur de celles-ci.

2. Particules de dextrine fibreuse selon la revendication 1, dans lesquelles la viscosité de la solution de dextrine à sécher par pulvérisation est de 170 mPa·s à 6 000 mPa·s.

3. Particules de dextrine fibreuse selon la revendication 1 ou la revendication 2, dans lesquelles la viscosité de la solution de dextrine est mesurée avec un viscosimètre de type B (Toki Sangyo ; TVB-10) à 12 tr/min avec la température de solution à 25 °C.

4. Particules de dextrine fibreuse selon l'une quelconque des revendications 1 à 3, dans lesquelles la concentration de la solution de dextrine à sécher par pulvérisation est de 40 % en masse ou plus.

5. Particules de dextrine fibreuse selon l'une quelconque des revendications 1 à 4, dans lesquelles la concentration de la solution de dextrine à sécher par pulvérisation est de 40 à 65 % en masse.

6. Particules de dextrine fibreuse selon l'une quelconque des revendications 1 à 5, dans lesquelles la concentration de la solution de dextrine à sécher par pulvérisation est de 50 à 60 % en masse.

7. Particules de dextrine fibreuse selon l'une quelconque des revendications 1 à 6, dans lesquelles l'épaisseur de celles-ci est de 0,1 à 100 µm.

8. Particules de dextrine fibreuse selon l'une quelconque des revendications 1 à 7, pouvant être obtenues en utilisant un sécheur par pulvérisation, dans lesquelles la température d'entrée de la chambre de séchage du sécheur par pulvérisation est de 140 à 220 °C.

9. Particules de dextrine fibreuse selon l'une quelconque des revendications 1 à 8, pouvant être obtenues en utilisant une solution de dextrine dans lesquelles l'équivalent dextrose (DE) de la dextrine est de 10 à 13.

10. Particules de dextrine fibreuse selon l'une quelconque des revendications 1 à 9, pouvant être obtenues en utilisant une dextrine en soluté, dans lesquelles le poids moléculaire moyen en poids de la dextrine en soluté est de 4 000 à 100 000 ou de 17 000 à 100 000.

11. Épaississant comprenant les particules de dextrine fibreuse selon l'une quelconque des revendications 1 à 10.

12. Aliment comprenant les particules de dextrine fibreuse selon l'une quelconque des revendications 1 à 10.

13. Procédé de préparation de particules de dextrine fibreuse, comprenant le séchage par pulvérisation d'une solution de dextrine ayant une viscosité de 100 mPa·s ou plus.

14. Procédé de préparation de particules de dextrine fibreuse selon la revendication 13, dans lequel la viscosité de la solution de dextrine à sécher par pulvérisation est de 170 mPa·s à 6 000 mPa·s.

15. Procédé de préparation de particules de dextrine fibreuse selon l'une quelconque des revendications 13 ou 14, dans lequel la concentration de la solution de dextrine à sécher par pulvérisation est de 40 % en masse ou plus.

16. Procédé de préparation de particules de dextrine fibreuse selon l'une quelconque des revendications 13 à 15, dans lequel la concentration de la solution de dextrine à sécher par pulvérisation est de 40 à 65 % en masse.

17. Procédé de préparation de particules de dextrine fibreuse selon l'une quelconque des revendications 13 à 16, dans lequel la concentration de la solution de dextrine à sécher par pulvérisation est de 50 à 60 % en masse.

18. Procédé de préparation de particules de dextrine fibreuse selon l'une quelconque des revendications 13 à 17, dans lequel la température d'entrée de la chambre de séchage d'un sécheur par pulvérisation est de 140 à 220 °C.

19. Procédé de préparation de particules de dextrine fibreuse selon l'une quelconque des revendications 13 à 18, dans lequel le DE de la dextrine est de 10 à 13.

20. Procédé de préparation de particules de dextrine fibreuse selon l'une quelconque des revendications 13 à 19, dans lequel le poids moléculaire moyen en poids de la dextrine en soluté est de 4 000 à 100 000 ou de 17 000 à 100 000.
